# EUROPEAN PATENT SPECIFICATION

(11) **EP 3 184 932 B1**
(45) Date of publication and mention of the grant of the patent: **12.02.2020**
(21) Application number: 15833730.3
(22) Date of filing: 30.06.2015
(51) Int. Cl.: F24S 90/00, F24S 80/20, F24S 60/30, F24S 10/40, F24S 10/70

(54) **SOLAR HEAT COLLECTION ADSORPTION COMPOSITE TUBE, SOLAR HEAT COLLECTION ADSORPTION COMPOSITE BED COMPOSED OF SOLAR HEAT COLLECTION ADSORPTION COMPOSITE TUBES, AND COOLING AND HEATING SYSTEM FORMED OF SOLAR HEAT COLLECTION ADSORPTION COMPOSITE BED**
ADSORPTIONSVERBUNDROHR FÜR SONNENWÄRMEGEWINNUNG, ADSORPTIONSVERBUNDBETT FÜR SONNENWÄRMEGEWINNUNG AUS ADSORPTIONSVERBUNDROHREN FÜR SONNENWÄRMEGEWINNUNG SOWIE KÜHL- UND HEIZSYSTEM AUS EINEM ADSORPTIONSVERBUNDBETT FÜR SONNENWÄRMEGEWINNUNG
TUBE COMPOSITE À ADSORPTION POUR COLLECTE DE CHALEUR SOLAIRE, LIT COMPOSITE À ADSORPTION POUR COLLECTE DE CHALEUR SOLAIRE COMPOSÉ DE TUBES COMPOSITES À ADSORPTION POUR COLLECTE DE CHALEUR SOLAIRE, ET SYSTÈME DE REFROIDISSEMENT ET DE CHAUFFAGE FORMÉ DU LIT COMPOSITE À ADSORPTION POUR COLLECTE DE CHALEUR SOLAIRE

(30) Priority: 22.08.2014 CN 201410419864
(43) Date of publication of application: 28.06.2017
(73) Proprietor: Zhongying Changjiang International New Energy Investment Co., Ltd, Wuhan Hubei 430223 (CN)
(72) Inventor: CHEN, Yilong, Wuhan Hubei 430223 (CN); HU, Shuchuan, Wuhan Hubei 430223 (CN); ZHANG, Yanfeng, Wuhan Hubei 430212 (CN)
(74) Representative: Zeuner Summerer Stütz
(86) International application number: PCT/CN2015/082787
(87) International publication number: WO 2016/026352

(56) References cited:
- CN-A- 101 581 506
- CN-A- 102 679 563
- CN-A- 104 154 666
- CN-U- 2 040 616
- CN-U- 203 550 274
- DE-A1- 4 302 281
- FR-A1- 2 501 347
- FR-A1- 2 501 347
- GB-A- 2 479 422

## Description

### FIELD OF THE INVENTION

The invention relates to the solar energy utilization technology, and more particularly to a solar heat collection adsorption composite tube, a solar heat collection adsorption composite bed composed of the solar heat collection adsorption composite tubes, and a cooling and heating system formed of the solar heat collection adsorption composition bed.

### BACKGROUND OF THE INVENTION

Since the 1970s, many countries have strengthened the support to the renewable energy under the impact of the oil crisis. Therefore, solar energy technology gains great development, the study field continues expanding, and many important achievements are realized, for example, composite parabolic concentrator, vacuum tube collector, amorphous silicon solar cells, solar thermal power generation, and photolysis of water. In 1992, the World Conference on Environment and Development was hold by United Nations in Brazil, and a series of important documents such as the Rio de Janeiro Declaration on Environment and Development and Agenda 21 were passed in the conference. Since then, the world's solar energy has entered another developing period, which is characterized by the utilization of solar energy, the close integration of the world's sustainable development and environmental protection, the focus on conversion of scientific and technological achievements into productive forces, the development of solar energy industry, and the expansion of the application field and the scale of the solar energy. China's solar energy utilization has developed rapidly in the past 10 years, and the application field has also been expanded. However, the use of the solar energy is only limited to electric power generation and heat supplying, and the development and the utilization of the solar energy leaves much to be desired.

The utility model CN203550274 relates to an adsorption bed based on a glass-metal evacuated collector tube and belongs to the technical field of adsorption beds. Document FR 2501347 A1 discloses a solar collector for powering refrigerator which has a vacuum tube filled with active solid and specified fluid acting on absorption cycle. Document CN101581506A relates to a straight-way solar energy heat exchange heat collector using solar energy as a heat source and belongs to the technical field of medium and high temperature solar energy utilization. Document GB2479422 discloses a solar adsorption apparatus.

### SUMMARY OF THE INVENTION

The technical problem to be solved by the invention is to provide a solar heat collection adsorption composite tube, a solar heat collection adsorption composite tube, and a cooling and heating system formed by the same. The cooling and heating system functions in both cooling and heating, and is configured to utilized the unit heat collection area to realize the water heating at the day time and water cooling in the night, or the continuous cooling and heating during the whole day. When the system is required for continuous refrigeration, two sets of systems are optionally operated in turn, one set of system is in the desorption state while the other set of system is in the adsorption state.

Technical scheme of the invention is as follows:
To solve the above technical problem, it is one objective of the invention to provide a solar heat collection adsorption composite tube. The solar heat collection adsorption composite tube comprises a solar vacuum tube having two open ends. An outer metal tube and an inner metal tube are coaxially disposed inside the solar vacuum tube. A water path is formed between the outer metal tube and the solar vacuum tube. A solid adsorbent is disposed between the outer metal tube and the inner metal tube for exchanging heat with water outside the outer metal tube. A plurality of through holes is disposed on the inner metal tube. An adsorbate is disposed in the inner metal tube. The adsorbate and the adsorbent form a working pair for adsorption and desorption for accomplishing heat release and heat adsorption.

In the above technical scheme, the through holes on the inner metal tube have diameters of 1-2 mm.

In the above technical scheme, the working pair formed by the adsorbate and the adsorbent comprises a gaseous adsorbate and the solid adsorbent.

In the above technical scheme, the working pair formed by the adsorbate and the adsorbent is methanol-active carbon or ammonia-active carbon.

To solve the above technical problem, it is one objective of the invention to provide a solar heat collection adsorption composite bed formed by the solar heat collection adsorption composite tube. The solar heat collection adsorption composite bed comprises: a lower header, an upper header, and the solar heat collection adsorption composite tubes communicating with the lower header and the upper header. Each of the lower header and the upper header is formed by a casing and inner bushings. A water header is disposed between the casing and the inner bushings. The inner bushings are adsorbate headers. The water header of the lower header communicates with the water header of the upper header via water paths of the solar heat collection adsorption composite tubes. The adsorbate headers of the lower header communicate with the adsorbate headers of the upper header via inner metal tubes of the collection adsorption composite tubes. A number of the solar heat collection adsorption composite tubes is 15-20.

To solve the above technical problem, it is one objective of the invention to provide a cooling and heating system formed by the solar heat collection adsorption composite bed. The system comprises: at least one solar heat collection adsorption composite bed arranged in parallel with each solar heat collection adsorption composite bed formed by the solar heat collection adsorption composite tubes, an adsorbate cycling sub-system, a water cycling sub-system, pipes for connecting different sub-systems and devices, and water pumps and valves disposed on the pipes. The adsorbate cycling sub-system comprises: a condenser, a liquid storing tank, and an evaporator. A working medium inlet of the condenser is connected to an adsorbate header of the upper header of the solar heat collection adsorption composite bed. A working medium outlet of the evaporator is connected to an adsorbate header of the lower header of the solar heat collection adsorption composite bed. The water cycling sub-system comprises: a hot-water storage tank, a cold-water tank, and a cold-water storage tank; a water outlet of the hot-water storage tank, a water outlet of the cold-water tank, and the water header of the lower header of the solar heat collection adsorption composite bed communicate with one another. A water inlet of the hot-water storage tank, a water inlet of the cold-water tank, and the water header of the upper header of the solar heat collection adsorption composite bed communicate with one another. The cold-water storage tank, the cold-water tank, and the evaporator 6 communicate with one another via water cycling pipelines for realizing heat exchange. The hot-water storage tank and the cold-water storage tank are respectively connected to a user for realizing controllable heating or cooling of the user.

Compared with the prior art, advantages of the invention are summarized as follows:
The solar heat collection adsorption composite tube has the cooling function at the same time the vacuum pipe collects heat, that is, the solar energy is able to transfer the heat to the adsorbent in the composite tubes via the vacuum pipes to realize heat storage in the day time. The adsorbent is heated to a certain temperature and then exchanges heat with the adsorbate to desorb the adsorbate. The adsorbate after desorption is cooled and stored in the evaporator. In the night, the adsorbent is cooled by the water from the water cooling system, the adsorbent after being cooled exchanges heat with the adsorbate to facilitate the adsorption of the adsorbate. And the refrigeration capacity is produced in the evaporation and cooling processes of the adsorbate in the evaporator. The heat collection, adsorption and heat storage, recovery, and cooling functions of the solar heat collection adsorption composite bed are realized by the adsorbate cycling sub-system and the water cycling sub-system. Thus, the utilization efficiency of the solar energy is improved. The system of the invention is integrated with a cooling pipeline system and a heating pipeline system, in which, the cold water cycling part is innovative and tackle the problem of heat dissipation in adsorption cooling and at the same time recover the adsorbed heat quantity. If the continuous cooling and heating functions are required for the whole day, two sets of systems of the same scale are necessitated, at the time one set of system is in the adsorption state, the other set of the system is in the desorption state. During the day time when the solar irradiation is strong, the adsorption process must utilize a sun-shedding curtain to shed the solar irradiation. The adsorption bed is required to be irradiated according to a certain angle, the sun-shedding curtain is covered on the adsorption bed and mounted on the guiding rails on two sides of the adsorption bed. The up and down sliding of the sun-shedding curtain is driven by rotation of a motor, thus, the covered and naked working conditions are achieved to realize the adsorption and desorption processes. The integrated system of the invention possesses the heating and cooling pipeline systems, in which, the water cooling cycling part is innovative and tackles the difficulty in heat dissipation in adsorption for cooling and recovered the adsorbed heat quantity.

### BRIEF DESCRIPTION OF THE DRAWINGS

FIG. **1** is a structure diagram of a solar heat collection adsorption composite bed in accordance with one embodiment of the invention;
FIG. **2** is a cross sectional view of a solar heat collection adsorption composite tube of FIG. **1****;** and
FIG. **3** is a heating/cooling system formed by the solar heat collection adsorption composite bed in accordance with one embodiment of the invention.

In the drawings, the following numbers are used: **1.** Solar heat collection adsorption composite bed **1.1.** Lower header; **1.2.** solar heat collection adsorption composite tube; **1.3.** Upper header; **1.2.1.** Solar vacuum tube; **1.2.2.** Outer metal tube; **1.2.3.** Inner metal tube; **1.2.4.** Adsorbent; **2.1-2.6.** Water pump; **3.** Hot-water storage tank; **4.** Condenser; **5.** Liquid storing tank; **6.** Evaporator; **7.** User; **8.** Cold-water tank; **9.** Cold-water storage tank; **10.1-10.10.** Valves; and **11.1-11.2.** Vacuum valves.

### DETAILED DESCRIPTION OF THE EMBODIMENTS

Specific embodiments of the invention are further described in details combining with the drawings hereinbelow.

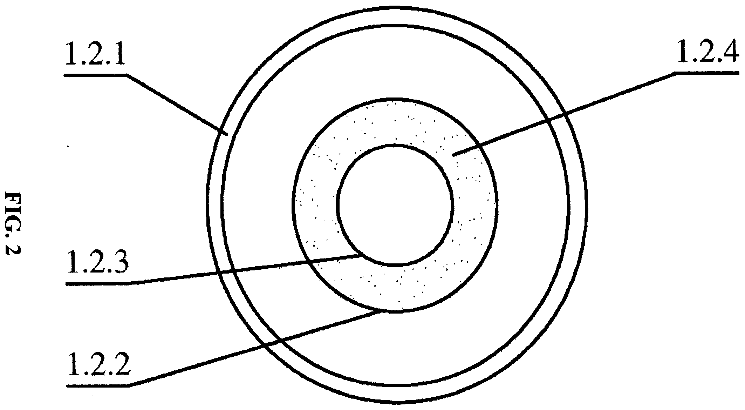

As shown in FIG **2****,** a solar heat collection adsorption composite tube **1.2** comprises a solar vacuum tube **1.2.1** having two open ends functioning in thermal collection and insulation. An outer metal tube **1.2.2** and an inner metal tube **1.2.3** are coaxially disposed inside the solar vacuum tube **1.2.1,** and both the outer metal tube **1.2.2** and the inner metal tube **1.2.3** are preferably made of metal materials of good thermal conductivity. A water path is formed between the outer metal tube **1.2.2** and the solar vacuum tube **1.2.1.** In use, the water is heated and directly supplied to the user. A solid adsorbent **1.2.4** is disposed between the outer metal tube **1.2.2** and the inner metal tube **1.2.3** for exchanging heat with water outside the outer metal tube **1.2.2,** therefore realizing desorption of the adsorbent **1.2.4.** The inner metal tube **1.2.3** is optionally selected from copper pipes, a plurality of through holes having diameters of 1-2 mm are disposed thereon. The inner metal tube **1.2.3** is used to introduce an adsorbate. A working pair is formed by the adsorbate and the above adsorbent **1.2.4** for realizing the adsorption and desorption of the adsorbate thus accomplishing the heat release and heat adsorption processes. The design of the through holes having the diameter of 1-2 mm is primarily based on the consideration of the adsorption rate and desorption rate of the working pair. It was found from experiments that the through holes having the diameter of **1**-2 mm facilitate the adsorption of the adsorbate for the adsorbent **1.2.4,** in the meanwhile, the desorption rate can be effectively controlled during the desorption, thus ensuring the continuous release of the desorbed heat.

The working pair formed by the adsorbate and the adsorbent **1.2.4** comprises a gaseous adsorbate and the solid adsorbent, which is advantageous in that the pyrolysis temperature is not highly required and is adaptable to the solar energy, the adsorption and pyrolysis amount and the COP value are relatively high. No additional power device is required. A preferable scheme is methanol-active carbon or ammonia-active carbon, in which, the active carbon is optionally added with a metal powder having good thermal conductivity, such as aluminum powder, then mixed with an organic adhesive, and thereafter adhered to an outer wall of the inner metal pipe **1.2.3,** and a weight of the metal powder does not exceed 30 wt. %.

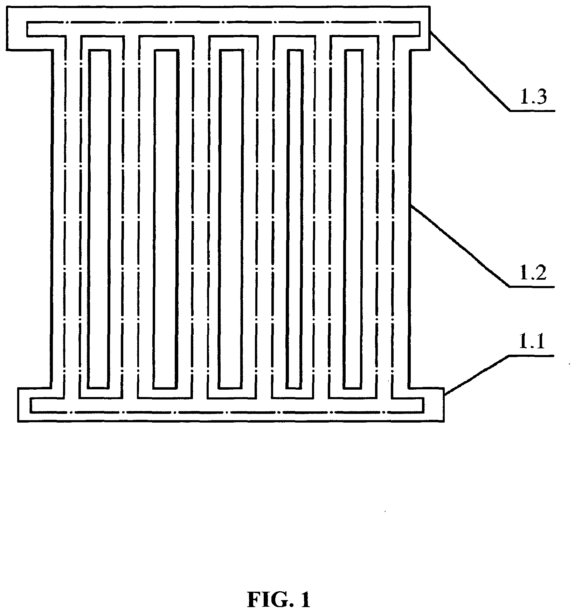

As shown in FIG. **1****,** the solar heat collection adsorption composite bed **1** formed by the solar heat collection adsorption composite tubes. The solar heat collection adsorption composite bed **1** comprises: a lower header **1.1,** an upper header **1.3,** and a plurality of the solar heat collection adsorption composite tubes **1.2** communicating with the lower header **1.1** and the upper header **1.3.** Each of the lower header **1.1** and the upper header **1.3** is formed by a casing and inner bushings. A water header is disposed between the casing and the inner bushings. The inner bushings are adsorbate headers. The water header of the lower header **1.1** communicates with the water header of the upper header **1.3** via water paths of the solar heat collection adsorption composite tubes **1.2.** The adsorbate headers of the lower header **1.1** communicate with the adsorbate headers of the upper header **1.3** via inner metal tubes **1.2.3** of the collection adsorption composite tubes **1.2.**

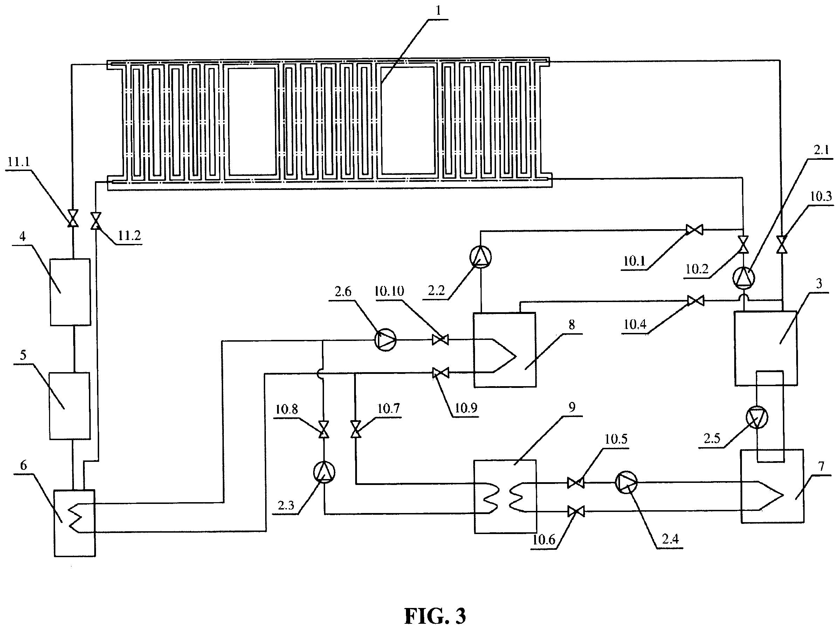

As shown in FIG. **3****,** a cooling and heating system formed by the solar heat collection adsorption composite bed comprises: three solar heat collection adsorption composite beds **1** arranged in parallel, an adsorbate cycling sub-system, a water cycling sub-system, pipes for connecting different sub-systems and devices, and water pumps **2.1-2.6,** valves **10.1-10.10,** and vacuum valves **11.1-11.2** disposed on the pipes. The adsorbate cycling sub-system comprises: a condenser **4,** a liquid storing tank **5,** and an evaporator **6.** A working medium inlet of the condenser **4** is connected to an adsorbate header of the upper header **1.3** of the solar heat collection adsorption composite bed. A working medium outlet of the evaporator **6** is connected to an adsorbate header of the lower header **1.1** of the solar heat collection adsorption composite bed. The water cycling sub-system comprises: a hot-water storage tank **3,** a cold-water tank **8,** and a cold-water storage tank **9.** A water outlet of the hot-water storage tank **3,** a water outlet of the cold-water tank **8,** and the water header of the lower header **1.1** of the solar heat collection adsorption composite bed **1** communicate with one another. A water inlet of the hot-water storage tank **3,** a water inlet of the cold-water tank **8,** and the water header of the upper header **1.3** of the solar heat collection adsorption composite bed **1** communicate with one another. The cold-water storage tank **9,** the cold-water tank **8,** and the evaporator **6** communicate with one another via water cycling pipelines for realizing heat exchange. The hot-water storage tank **3** and the cold-water storage tank **9** are respectively connected to a user **7** for realizing controllable heating or cooling of the user **7.**

Working principle of the cooling and heating system is as follows:
1) Heating process: in the day time when the solar irradiation is strong, the solar energy is adsorbed by the solar heat collection adsorption composite bed **1,** and the water in the solar vacuum pipe **1.2.1** is heated. When the water temperature reaches to a set temperature, start the water pump **2.1,** open the valves **10.2, 10.3** and close the valve **10.1** to allow the water in the hot-water storage tank **3** to enter the solar heat collection adsorption composite bed **1** via the lower header **1.1,** after being heated, the water is discharged from the upper header **1.3** and returned to the hot-water storage tank 3 for storage.
2) Cooling process: in the day time when the solar irradiation is strong, during the heating process, the heated water transfers heat to the adsorbent **1.2.4** which is in the form of a complex by adsorbing methanol. Open the vacuum valve **11.1,** generally when the temperature of the adsorbent **1.2.4** reaches 60-70°C, the methanol as the adsorbate begins to desorb. When the temperature reaches 85°C, a large amount of the methanol as the adsorbate is desorbed, ammonia enters the inner metal pipe **1.2.3** via the through hole and then passes through the upper header **1.3** to enter the condenser **4** for cooling. The liquid methanol enters the liquid storage tank **5** and finally enters the evaporator **6** for storage until the desorption of the adsorbent **1.2.4** is finished.

After the sunset or in the day time when the solar irradiation is shed by a sun-shedding curtain, in the water cycling sub-system: the water temperature in the solar heat collection adsorption composite bed **1** is decreased, the valves **10.2, 10.4** is closed, the valves **10.1, 10.3** are opened, and the water pump **2.2** is started to extract cold water at 20°C below from the cold-water tank **8** to the solar heat collection adsorption composite bed **1** via the lower header **1.1.** The cold water exchanges heat with the adsorbent **1.2.4,** the temperature of the adsorbent **1.2.4** decreases and is in an adsorbing state. Heat quantity released in the adsorbing process is transferred to the water and therefore the water temperature gradually increases. The heated water is discharged from the upper header **1.3** and introduced to the hot-water storage tank **3,** thus, the adsorbed heat quantity is recovered via the hot-water storage tank **3.** In the meanwhile, in the adsorbate cycling sub-system, when the temperature of the adsorbent **1.2.4** decreases to 40-50°C, the vacuum valve **11.2** is opened, so that the adsorbent **1.2.4** starts to adsorb methanol. When the temperature of the adsorbent **1.2.4** decreases to 30°C, a large amount of the methanol as the adsorbate is adsorbed, in the meanwhile, the methanol the refrigerant in the evaporator **6** is evaporated for refrigeration. The refrigeration capacity of the refrigerant is transferred to chilled water, and the chilled water is stored in the cold-water storage tank **9** for supply refrigeration capacity for the user **7** for a long period. In the meanwhile, the evaporator **6** or the cold-water storage tank **9** is adopted to replenish the refrigeration capacity of the cold-water tank **8,** thus ensuring the normal operation of the system.

In sum, the hot-water storage tank **3** functions in storing heated water for the user **7** as well as recovering adsorbed heat quantity; and the cold-water storage tank **9** functions in storing cold water for the user **7** and replenishing refrigeration capacity for the cold-water tank **8.** The cold-water tank **8** functions in facilitating the adsorption of the adsorbate and the heat release process.

The key technology of the invention is the structure arrangement of the solar vacuum pipe **1.2.1,** the outer metal tube **1.2.2,** the inner metal tube **1.2.3,** and the adsorbent **1.2.4** in the solar heat collection adsorption composite bed. The solar heat collection adsorption composite tube has the functions of heat collection, adsorption, and desorption. The adsorbate cycling sub-system and the water cycling sub-system are employed to realize the heat collection, heat adsorption, storage, and recover, and refrigeration of the solar heat collection adsorption composite bed. The use effect of the solar energy is saved, the occupied area and the investment are saved, and the energy efficiency is improved. Thus, the protection of the invention is not limited to the above embodiments. It is obviously to the persons skilled in the art that changes and modifications may be made without departing from the true spirit and scope of the invention. For example, selection of the working pair is not limited to the active carbon-methanol as described in the above, working pairs, including the ammonia-active carbon, which has the not highly required pyrolysis temperature and relatively high adsorption pyrolysis amount and COP value and is adaptable to the solar agent also work. Correspondingly, the pipelines and devices of the adsorbate cycling sub-system can be appropriately adjusted. The specification and the number of the solar heat collection adsorption composite tubes **1.2** in the solar heat collection adsorption composite bed **1,** and the specification and the number of the solar heat collection adsorption composite bed **1** in the heating-cooling system are determined according to practical needs. If the changes and the modifications fall within the scope of the claims of the invention, then the invention is intended to include such changes and modifications.

## Claims

1. A solar heat collection adsorption composite tube, **characterized in that** the solar heat collection adsorption composite tube (1.2) comprises a solar vacuum tube (1.2.1) having two open ends; an outer metal tube (1.2.2) and an inner metal tube (1.2.3) are coaxially disposed inside the solar vacuum tube (1.2.1); a water path is formed between the outer metal tube (1.2.2) and the solar vacuum tube (1.2.1); a solid adsorbent (1.2.4) is disposed between the outer metal tube (1.2.2) and the inner metal tube (1.2.3) for exchanging heat with water outside the outer metal tube (1.2.2); a plurality of through holes are disposed on the inner metal tube (1.2.3); an adsorbate is disposed in the inner metal tube (1.2.3); and the adsorbate and the adsorbent (1.2.4) form a working pair for adsorption and desorption for accomplishing heat release and heat adsorption.

2. The tube of claim 1, **characterized in that** the through holes on the inner metal tube (1.2.3) have diameters of 1-2 mm.

3. The tube of claim 1 or 2, **characterized in that** the working pair formed by the adsorbate and the adsorbent (1.2.4) comprises a gaseous adsorbate and the solid adsorbent.

4. The tube of claim 3, **characterized in that** the working pair formed by the adsorbate and the adsorbent (1.2.4) is methanol-active carbon or ammonia-active carbon.

5. A solar heat collection adsorption composite bed comprising the solar heat collection adsorption composite tubes of any of claims 1-4, **characterized in that** the solar heat collection adsorption composite bed comprises: a lower header (1.1), an upper header (1.3), and the solar heat collection adsorption composite tubes (1.2) communicating with the lower header (1.1) and the upper header (1.3); each of the lower header (1.1) and the upper header (1.3) comprises a casing and inner bushings; a water header is disposed between the casing and the inner bushings; the inner bushings are adsorbate headers; the water header of the lower header (1.1) communicates with the water header of the upper header (1.3) via water paths of the solar heat collection adsorption composite tubes (1.2); the adsorbate headers of the lower header (1.1) communicate with the adsorbate headers of the upper header (1.3) via inner metal tubes (1.2.3) of the collection adsorption composite tubes (1.2).

6. The composite bed of claim 5, **characterized in that** a number of the solar heat collection adsorption composite tubes (1.2) is 15-20.

7. A cooling and heating system formed by the solar heat collection adsorption composite bed of claim 5 or 6, the system **characterized by** comprising: at least one solar heat collection adsorption composite bed (1) arranged in parallel with each solar heat collection adsorption composite bed comprising the solar heat collection adsorption composite tubes, an adsorbate cycling sub-system, a water cycling sub-system, pipes for connecting different sub-systems and devices, and water pumps and valves disposed on the pipes;
wherein
the adsorbate cycling sub-system comprises: a condenser (4), a liquid storing tank (5), and an evaporator (6); a working medium inlet of the condenser (4) is connected to an adsorbate header of the upper header (1.3) of the solar heat collection adsorption composite bed; a working medium outlet of the evaporator (6) is connected to an adsorbate header of the lower header (1.1) of the solar heat collection adsorption composite bed; and
the water cycling sub-system comprises: a hot-water storage tank (3), a cold-water tank (8), and a cold-water storage tank (9); a water outlet of the hot-water storage tank (3), a water outlet of the cold-water tank (8), and the water header of the lower header (1.1) of the solar heat collection adsorption composite bed (1) communicate with one another; a water inlet of the hot-water storage tank (3), a water inlet of the cold-water tank (8), and the water header of the upper header (1.3) of the solar heat collection adsorption composite bed (1) communicate with one another; the cold-water storage tank (9), the cold-water tank (8), and the evaporator (6) communicate with one another via water cycling pipelines for realizing heat exchange; and the hot-water storage tank (3) and the cold-water storage tank (9) are respectively connected to a user (7) for realizing controllable heating or cooling of the user (7).

## Patentansprüche

1. Adsorptionsverbundrohr für die Sonnenwärmegewinnung, **dadurch gekennzeichnet, dass** das Adsorptionsverbundrohr für Sonnenwärmegewinnung (1.2) ein Solarvakuumrohr (1.2.1) mit zwei offenen Enden umfasst; ein äußeres Metallrohr (1.2.2) und ein inneres Metallrohr (1.2.3) koaxial innerhalb des Solarvakuumrohrs (1.2.1) angeordnet sind; ein Wasserpfad zwischen dem äußeren Metallrohr (1.2.2) und dem Solarvakuumrohr (1.2.1) ausgebildet ist; ein festes Adsorptionsmittel (1.2.4) zwischen dem äußeren Metallrohr (1.2.2) und dem inneren Metallrohr (1.2.3) zum Wärmeaustausch mit Wasser außerhalb des äußeren Metallrohrs (1.2.2) angeordnet ist; eine Vielzahl von Durchlasslöchern an dem inneren Metallrohr (1.2.3) angeordnet ist; ein Adsorbat in dem inneren Metallrohr (1.2.3) angeordnet ist; und das Adsorbat und das Adsorptionsmittel (1.2.4) ein Arbeitspaar für Adsorption und Desorption bilden, um Wärmeabgabe und Wärmeadsorption zu erreichen.

2. Rohr nach Anspruch 1, **dadurch gekennzeichnet, dass** die Durchlassbohrungen am inneren Metallrohr (1.2.3) Durchmesser von 1-2 mm aufweisen.

3. Rohr nach Anspruch 1 oder 2, **dadurch gekennzeichnet, dass** das durch das Adsorbat und das Adsorptionsmittel (1.2.4) gebildete Arbeitspaar ein gasförmiges Adsorbat und das feste Adsorptionsmittel umfasst.

4. Rohr nach Anspruch 3, **dadurch gekennzeichnet, dass** das aus dem Adsorbat und dem Adsorptionsmittel (1.2.4) gebildete Arbeitspaar Methanol-Aktivkohle oder Ammoniak-Aktivkohle ist.

5. Adsorptionsverbundbett für die Sonnenwärmegewinnung umfassend die Adsorptionsverbundrohre für Sonnenwärmegewinnung nach einem der Ansprüche 1-4, **dadurch gekennzeichnet, dass** das Adsorptionsverbundbett für Sonnenwärmegewinnung umfasst: einen unteren Sammler (1.1), einen oberen Sammler (1.3) und die Adsorptionsverbundrohre für Sonnenwärmegewinnung (1.2), die mit dem unteren Sammler (1.1) und dem oberen Sammler (1.3) verbunden sind; der untere Sammler (1.1) und der obere Sammler (1.3) jeweils ein Gehäuse und Innenbuchsen umfassen; ein Wassersammler zwischen dem Gehäuse und den Innenbuchsen angeordnet ist; die Innenbuchsen Adsorbatsammler sind; der Wassersammler des unteren Sammlers (1.1) mit dem Wassersammler des oberen Sammlers (1.3) über Wasserpfade der Adsorptionsverbundrohre für Sonnenwärmegewinnung (1.2) verbunden ist; die Adsorbatsammler des unteren Sammlers (1.1) mit den Adsorbatsammlern des oberen Sammlers (1.3) über innere Metallrohre (1.2.3) der Adsorptionsverbundrohre (1.2) verbunden sind.

6. Verbundbett nach Anspruch 5, **dadurch gekennzeichnet, dass** eine Anzahl der Adsorptionsverbundrohre für Sonnenwärmegewinnung (1.2) 15-20 beträgt.

7. Kühl- und Heizsystem, das durch das Adsorptionsverbundbett für Sonnenwärmegewinnung nach Anspruch 5 oder 6 gebildet ist, **dadurch gekennzeichnet, dass** es umfasst: mindestens ein Adsorptionsverbundbett für Sonnenwärmegewinnung (1), das parallel zu jedem Adsorptionsverbundbett für Sonnenwärmegewinnung angeordnet ist, das die Adsorptionsverbundrohre für Sonnenwärmegewinnung, ein Adsorbat-Zyklus-Subsystem, ein Wasser-Zyklus-Subsystem, Rohre zum Verbinden verschiedener Subsysteme und Vorrichtungen sowie Wasserpumpen und Ventile umfasst, die an den Rohren angeordnet sind;
wobei
das Adsorbat-Zyklus-Subsystem umfasst: einen Kondensator (4), einen Flüssigkeitsspeicherbehälter (5) und einen Verdampfer (6); einen Arbeitsmitteleinlass des Kondensators (4), der mit einem Adsorbatsammler des oberen Sammleres (1.3) des Adsorptionsverbundbettes für Sonnenwärmegewinnung verbunden ist; einen Arbeitsmittelauslass des Verdampfers (6), der mit einem Adsorbatsammler des unteren Sammleres (1.1) des Adsorptionsverbundbettes für Sonnenwärmegewinnung verbunden ist; und
das Wasserumlauf-Subsystem umfasst: einen Warmwasserspeichertank (3), einen Kaltwassertank (8) und einen Kaltwasserspeichertank (9); wobei ein Wasserauslass des Warmwasserspeichertanks (3), ein Wasserauslass des Kaltwassertanks (8) und der Wassersammler des unteren Sammlers (1.1) des Adsorptionsverbundbettes für Sonnenwärmegewinnung (1) miteinander verbunden sind; ein Wassereinlass des Warmwasserspeichertanks (3), ein Wassereinlass des Kaltwassertanks (8) und der Wassersammler des oberen Sammlers (1.3) des Adsorptionsverbundbettes für Sonnenwärmegewinnung (1) miteinander verbunden sind; der Kaltwasserspeichertank (9), der Kaltwassertank (8) und der Verdampfer (6) über Wasserumlaufleitungen miteinander verbunden sind, um einen Wärmeaustausch zu realisieren; und der Warmwasserspeichertank (3) und der Kaltwasserspeichertank (9) jeweils mit einem Nutzer (7) verbunden sind, um eine steuerbare Erwärmung oder Kühlung des Nutzers (7) zu realisieren.

## Revendications

1. Tube composite à adsorption de collecte de chaleur solaire, **caractérisé en ce que** le tube composite à adsorption de collecte de chaleur solaire (1.2) comprend un tube à vide solaire (1.2.1) doté de deux extrémités ouvertes ; qu'un tube métallique extérieur (1.2.2) et un tube métallique intérieur (1.2.3) sont disposés coaxialement à l'intérieur du tube à vide solaire (1.2.1) ; qu'un passage d'eau est formé entre le tube métallique extérieur (1.2.2) et le tube à vide solaire (1.2.1) ; qu'un adsorbant solide (1.2.4) est disposé entre le tube métallique extérieur (1.2.2) et le tube métallique intérieur (1.2.3) pour échanger de la chaleur avec l'eau en dehors du tube métallique extérieur (1.2.2) ; qu'une pluralité de trous traversants sont pratiqués sur le tube métallique intérieur (1.2.3) ; qu'un adsorbat est disposé dans le tube métallique intérieur (1.2.3) ; et que l'adsorbat et l'adsorbant (1.2.4) forment une paire fonctionnelle pour l'adsorption et la désorption pour réaliser un dégagement de chaleur et une adsorption de chaleur.

2. Tube selon la revendication 1, **caractérisé en ce que** les trous traversants du tube métallique intérieur (1.2.3) ont des diamètres de 1 à 2 mm.

3. Tube selon la revendication 1 ou 2, **caractérisé en ce que** la paire fonctionnelle formée par l'adsorbat et l'adsorbant (1.2.4) comprend un adsorbat gazeux et l'adsorbant solide.

4. Tube selon la revendication 3, **caractérisé en ce que** la paire fonctionnelle formée par l'adsorbat et l'adsorbant (1.2.4) est du charbon actif au méthanol ou du charbon actif à l'ammonium.

5. Lit composite à adsorption de collecte de chaleur solaire, comprenant les tubes composites à adsorption de collecte de chaleur solaire selon l'une quelconque des revendications 1 à 4, **caractérisé en ce que** le lit composite à adsorption de collecte de chaleur solaire comprend : une tête inférieure (1.1), une tête supérieure (1.3), et que les tubes composites à adsorption de collecte de chaleur solaire (1.2) communiquent avec la tête inférieure (1.1) et la tête supérieure (1.3) ; que chacune parmi la tête inférieure (1.1) et la tête supérieure (1.3) comprend un compartiment et des coussinets intérieurs, qu'une tête à eau est disposée entre le compartiment et les coussinets intérieurs ; que les coussinets intérieurs sont des têtes d'adsorbat ; que la tête à eau de la tête inférieure (1.1) communique avec la tête à eau de la tête supérieure (1.3) par l'intermédiaire de passages d'eau des tubes composites à adsorption de collecte de chaleur solaire (1.2) ; que les têtes d'adsorbat de la tête inférieure (1.1)) communiquent avec les têtes d'adsorbat de la tête supérieure (1.3) par l'intermédiaire de tubes métalliques intérieurs (1.2.3) des tubes composites à adsorption de collecte de chaleur solaire (1.2).

6. Lit composite selon la revendication 5, **caractérisé en ce qu'**un nombre de tubes composites à adsorption de collecte de chaleur solaire (1.2) est de 15 à 20.

7. Système de refroidissement et de chauffage formé par le lit composite à adsorption de collecte de chaleur solaire selon la revendication 5 ou 6, le système étant **caractérisé en ce qu'**il comprend : au moins un lit composite à adsorption de collecte de chaleur solaire (1) disposé parallèlement à chaque lit composite à adsorption de collecte de chaleur solaire comprenant les tubes composites à adsorption de collecte de chaleur solaire, un sous-système de circuit d'adsorbat, un sous-système de circuit d'eau, des tuyaux pour connecter différents sous-systèmes et dispositifs, et des pompes à eau et des vannes disposées sur les tuyaux ;
dans lequel
le sous-système de circuit d'adsorbat comprenant : un condenseur (4), un réservoir de stockage de liquide (5) et un évaporateur (6) ; une entrée de fluide fonctionnelle du condenseur (4) étant connectée à une tête d'adsorbat de la tête supérieure (1.3) du lit composite à adsorption de collecte de chaleur solaire ; une sortie de fluide fonctionnel de l'évaporateur (6) étant connectée à une tête d'adsorbat de la tête inférieure (1.1) du lit composite à adsorption de collecte de chaleur solaire ; et
le sous-système de circuit d'eau comprenant : un réservoir de stockage d'eau chaude (3), un réservoir à eau froide (8), et un réservoir de stockage d'eau froide (9) ; une sortie d'eau du réservoir de stockage d'eau chaude (3), une sortie d'eau du réservoir d'eau froide (8), et la tête à eau de la tête inférieure (1.1) du lit composite à adsorption de collecte de chaleur solaire (1) communiquant entre elles ; une admission d'eau du réservoir de stockage d'eau chaude (3), une entrée d'eau du réservoir d'eau froide (8), et la tête à eau de la tête supérieure (1.3) du lit composite à adsorption de collecte de chaleur solaire (1) communiquant entre elles ; le réservoir de stockage d'eau froide (9), le réservoir d'eau froide (8), et l'évaporateur (6) communiquant entre eux par l'intermédiaire de conduites de circuit d'eau pour réaliser un échange thermique ; et le réservoir de stockage d'eau chaude (3) et le réservoir de stockage d'eau froide (9) étant respectivement connectés à un utilisateur (7) pour réaliser un chauffage ou un refroidissement contrôlable de l'utilisateur (7).
